# EUROPEAN PATENT APPLICATION

(11) **EP 0 776 930 A1**
(43) Date of publication of application: **04.06.1997**
(21) Application number: 95810742.7
(22) Date of filing: 29.11.1995
(51) Int. Cl.: C08J 11/04, C08G 81/02, C08L 23/02

(54) **Process for reclamation of recycled polyolefins and polymeric material manufactured according to this process**

(71) Applicant: Pheniplastics S.A., 9496 Balzers (LI)
(72) Inventor: Boulgakov, Viktor, Tbilisi (GE); Pikous, Eugeni, Tbilisi (GE); Djavakhichvili, Gueorguie, Tbilisi (GE)
(74) Representative: Groner, Manfred

(57) **Abstract**

A method of reclamation or regeneration of recycled polyolefins comprises thermochemical modification of preliminarily disintegrated and washed of dirt recycled polyolefins, by treatment in liquid polyorganosiloxane under the conditions of constant stirring. Added to the polyolefin, modified by polyorganosiloxane is 10 - 50 wt.% of finely dispersed inert filler preliminarily activated by radical-forming silanes, whereupon the product obtained is subjected to granulation.

## Description

### Technical Field

The present invention relates to plastics technology, particularly, to processing techniques of polyolefins and has particular reference to a process of reclaiming recycled polyolefins and polymeric material manufactured according to this process.

### Prior Art

At present one of the most vital problems in the up-to-date technology of polymers is the elaboration of waste polymer recovery processes, of reclamation of used-up waste polymers and waste products of processing thereof for comprehensive reuse.

Known in the art are processes of reclamation of recycled polyolefins which lost their elasticity due to various kinds of ageing, as well as reclamation of production waste of products made from polyolefin materials (SU, A, 10495505, 1199769).

According to SU, A, 10495505, recycled polyethylene and polypropylene are disintegrated till the particle size of 10 mm is obtained, washed of dirt and placed into 0.09 - 0.11% ferrocene water solution.

The activation of the polymer by ferrocene at a temperature of from 80 to 100°C within a time period of from 2 to 3 hours ensures formation of active radicals in the place of oxidized groups in this polymer. Then the polymers being reclaimed are treated by liquid polyethylsiloxane at a temperature of from 85 to 95°C for 5.5 to 6.5 hours, which ensures space structure formation of polymer active radicals formed at the preceding stage of treatment through siloxane bridge bonds, whereupon reclaimed polyolefins are dried and subjected to granulation. The granulate is used as an additive to raw materials, particularly, to primary (standard-grade) polyolefin in the production of pipes, air ducts, various items produced by die casting.

According to the Inventor's Certificate SU, A, 1199769, for the purpose of reclamation or regeneration of polyolefins, they are disintegrated, washed and modified by interreaction with an inorganic filler, such as, for instance, titanium oxide which has been preliminarily activatd by live steam under pressure of 3 to 4 atm, and then treated by a silicon-organic compound. The modified polymer is then subjected to granulation.

Said processes ensure provision of thermal structure-forming compositions amenable to die casting and extrusion which are essentially reclaimed polyolefins, featuring sufficiently high thermal stability, heat resistance and chemical inertness.

However, the attained rigidity, brittleness and elasticity of polyolefins that have been subjected to reclamation do not allow their employment under the conditions of excessive loads.

### Disclosure of the Invention

It is an object of the present invention to provide a process of reclamation of recycled polyolefins, which improves their physicomechanical and technological parameters, by converting recycled polyolefins into a heterogeneous system.

Said object is attained by that in a process of reclamation or regenaration of recycled polyolefins comprising thermochemical modification of recycled polyolefins , preliminarily disintegrated and washed of impurities, which is carried out under constant stirring in a reaction medium of liquid polyorganosiloxanes, subsquent drying and granulation of thus modified polyolefins, according to the invention, prior to granulation, from 10 to 50 wt.% of an inert filler is added to modified recycled polyolefins, the inert filler being preliminarily activated by radical-forming silanes.

Owing to the proposed invention it becomes possible not only to restore the physicomechanical properties of recycled polyolefins, but also to obtain polymeric compositions whose characteristics are much better than those of similar compositions based on primary (standard-grade) polyolefins, which, to be more precise, have the following characteristics:

The reclaimed polyethylene has the ultimate tensile strength up to 18 MPa, ultimate elongation up to 20% softening point, 120°C, melt flowability index equal to 4 g/10 min, and the reclaimed polypropylene has the ultimate tensile strength of 40 MPa, ultimate elongation, 16% and softening point, 160°C.

Advantageously, used as an activating radical-forming silane is the compound selected from the group consisting of chlorosilanes, aminosilanes, diphenylsilanediols.

According to the invention, used preferably as an inert filler is a finely dispersed mineral substance selected from the group consisting of perlite, white soot, talc, chalk, kaolin, zinc oxide, titanium dioxide.

The embodiment of the proposed invention resides in the fact that, added into the mixture of modified recycled polyolefins with an activated filler, is from 0.5 to 2.0 wt.% of structure-forming agents, whereupon granulation is carried out, which ensures attainment of significantly higher rigidity, hardness, elastic modulus and heat resistance of the product obtained.

According to the present invention, it is expedient that organic peroxide, chinon or diphenylguanidine be used as a structure-forming agent.

Other objects and advantages of the present invention will become clearer from the following detailed description of the process of regeneration of secondary polyolefins and particular embodiments of this process.

### Preferred Embodiment of the Invention

In accordance with the proposed invention, subjected to reclamation are polyolefin materials which lost their original elasticity due to various kinds of ageing, used-up products made from polyolefin polymers, production waste products of polyolefin polymers, and, specifically, such polyolefins as polyethylene of high and low density and polypropylene.

Taking into account that the majority of recycled polyolefins are badly soiled, they are washed with standard detergents after they have been preliminarily disintegrated in crushers until particles sized up to 10 mm are obtained (for cast articles) and not below 15 mm (for filmy articles).

According to the invention, disintegrated, washed of dirt and dried recycled polyolefins are loaded into liquid polyorganosiloxane medium, which is constantly stirred. Used as polyorganosiloxane may be compounds of linear structure of the general formula

Si - 0 - Si ,

and, more
particularly, polyethylhydrosiloxane, polymethylphenylsiloxane.

In the medium of constantly stirred polyorganosiloxane at a temperature of from 85 to 125°C grafting of polyorganosiloxane molecules to the molecules of polyolefins takes place, that is, modification of the latter. The grafting is carried out at the active centres of the polymers being treated: unsaturated bonds, tertiary hydrocarbon atoms, oxygen-containing groups, thereby facilitating structure formation along the graft siloxane groups. In so doing, physicomechanical and technological properties of the polyolefins are restored, the polyolefins, according to the invention, further on serving as a polymer matrix.

Next, in accordance with the invention, added to polyolefins thus modified, namely, to the polymeric matrix, is from 10 to 50 wt.% of finely dispersed inactive filler, which, according to the invention, was preliminarily activated by radical-forming silane.

If said filler is added to dried, modified polyolefins in an amount exceeding 50 wt.%, the physicomechanical characteristics of the composition produced are impaired; for instance, it becomes brittle. The contents of the filler below 10 wt.% does not ensure the requisite change of the composition characteristics.

Used as the inactive filler may be perlite, white soot, talc, chalk, kaolin, zinc oxide, titanium dioxide. The size of particles of the filler is preferably from 5 to 30 µ. Activation of said filler is effected by radical-forming silane, such as, for instance, chlorosilane (dimethyldichlorosilane, trimethylchlorosilane, oligochlorosilane) aminosilane (phenylaminomethyldiethoxysilane, gamma-aminopropyldiethoxysilane) diphenylsilanediol taken in an amount not exceeding 3 wt.%.

The activation is effected according to generally adopted methods under constant stirring and a temperature providing sorption by filler particles of silane used, normally, at a temperature of from 60 to 120°C, whereby active Si-O-R bonds are formed.

The polymeric composition thus obtained is essentially filled polyolefin whose characteristics are determined by the properties of the polymeric matrix and filler.

According to the proposed invention, added to the obtained polymeric mixture may be from 0.5 to 2.0 wt.% of structure-forming agents, for instance, radical-forming compounds, such as organic peroxide, chinon or diphenylguanidine. Inroduction of said compounds conduces to enhanced composition rigidity, hardness, elastic modulus and heat resistance.

Pursuant to the essence of the invention, the compositions are subjected to granulation at a temperature of from 160 to 180°C (for polyethylene) and from 180 to 220°C (for polypropylene). In the process of granulation the composition obtained is homogenized.

The proposed process enables one to obtain reclaimed polyolefins which are essentially elastoviscous filled polymers having high resistance to impact loads, to the effect of surfactant media, and chemical stability to mineral acids and alkali. Moreover, the process of the invention helps obtain compositions having target characteristics, that is, enhanced mechanical strength and heat resistance, or compositions featuring high elasticity, resistant to impact loads and frost resistant.

The finished polymeric material features much better characteristics than compositions obtained on the basis of primary (standard-grade) polyolefins.

### Example 1

Sorted out recycled polypropylene is disintegrated in crushers (the degree of disintegration of cast products should not exceed 10 mm of nominal diameter). The degree of disintegration of filmy products should ensure provision of strips with the width not exceeding 10 - 15 mm.

The disintegrated waste products are washed of dirt, using dinaphthalenesulfonate at a temperature of from 70 to 80°C.

The thus-preconditioned recycled polypropylene is loaded into a reaction vessel containing stirred polyethylsiloxane (the mixer operates at 60 rev/min). The temperature is 125°C. Polypropylene remains in the reaction vessel for two hours, then, after it has been dried, added to the modified polypropylene is 30 wt.% of perlite activated by phenylaminomethylmethyldiethoxysilane (taken in an amount of 3% of the whole weight of polymer). The mixture is forwarded to homogenization in an extruder at 160 - 180°C and a pressure of 200 kg/cm². Next, the homogenized mixture is placed into a cooling bath, whereupon it is forwarded to granulation at a temperature of 180 - 220°C.

The physicomechanical characteristics of the finished product are presented in Table 1

### Example 2

Recycled polypropylene is subjected to reclamation under conditions similar to those of Example 1. However, after introduction of a filler, added to the obtained mixture is 0.5% (of the weight of polypropylene) of chinon.

The physicomechanical characteristics of the obtained granulated product are given in Table 1.

### Example 3

Recycled polypropylene is subjected to reclamation under conditions similar to those of Example 1. However, the disintegrated and washed of dirt recycled polypropylene is loaded into the reactor containing polymethylphenylsiloxane, which is stirred. The rotation speed of the mixer is 50 rev/min. The temperature is 100°C. Polypropylene remains in the reactor for five hours, whereupon introduced into the polypropylene, modified by polymethylphenylsiloxane, is 35 wt.% of zinc oxide activated by dimethyldichlorosilane (1% of the whole weight of polymer).

The physicomechanical characteristics of the finished granulated product are presented in Table 1.

### Example 4

Recycled polypropylene is reclaimed under conditions similar to those of Example 1. However the disintegrated and washed of dirt polypropylene is loaded into a reaction vessel containing polymethylsiloxane, which is stirred. The rotation speed of the mixer is 50 rev/min. Temperature is 85°C. Polypropylene remains in the reactor for an hour and a half. Added to the polypropylene modified by polymethylsiloxane is 50 wt.% of zinc oxide activated by dimethyldichlorosilane (2 wt.% of the weight of polypropylene), and dicumyl peroxide in an amount of 2% of the weight of polypropylene. Granulation is carried out at a temperature of 200°C.

The physicomechanical characteristics of the granulated product are presented in Table 1.

### Example 5

Recycled polypropylene is reclaimed under conditions similar to those of Example 1.

However, disintegrated and washed recycled polyethylene is loaded into a reaction vessel containing polyethylsiloxane, which is stirred. The mixer rotates at 50 rev/min. The temperature is 85°C. Polyethylene remains in the reactor for 1 hour, whereupon the modified polyethylene is dried and added thereto is 50 wt.% of talc activated by diphenylsilanediol (3% of the weight of polyethylene).

The physicomechanical characteristics of the resultant product are given in Table 1.

### Example 6

Recycled polyethylene is reclaimed under conditions similar to those of Example 5. However, after the polymer is modified and dried, it is forwarded to a mixer where it is intermixed with 10 wt.% of talc activated by diphenylsilanediol (3% of the weight of polyethylene) and with 3 wt.% of diphenylguanidine, the process being carried out at a temperature of 20°C, rotation speed of the mixer 40 rev/min, for a time period of 1 hour.

The physicomechanical characteristics of the finished product are presented in Table 1.

### Example 7

Recycled polyethylene is reclaimed under conditions similar to those of Example 5. However, after the polymer is modified and dried, it is placed into a mixer where it is intermixed with 40 wt.% of perlite activated by trimethylchlorosilane (2% of the weight of polyethylene) and with 1 wt.% of benzoyl peroxide, the process being carried out at a temperature of 20°C, rotation speed of the mixer 40 rev/min, for a time period of 1 hour.

The physicomechanical characteristics of the resultant granulated product are presented in Table 1.

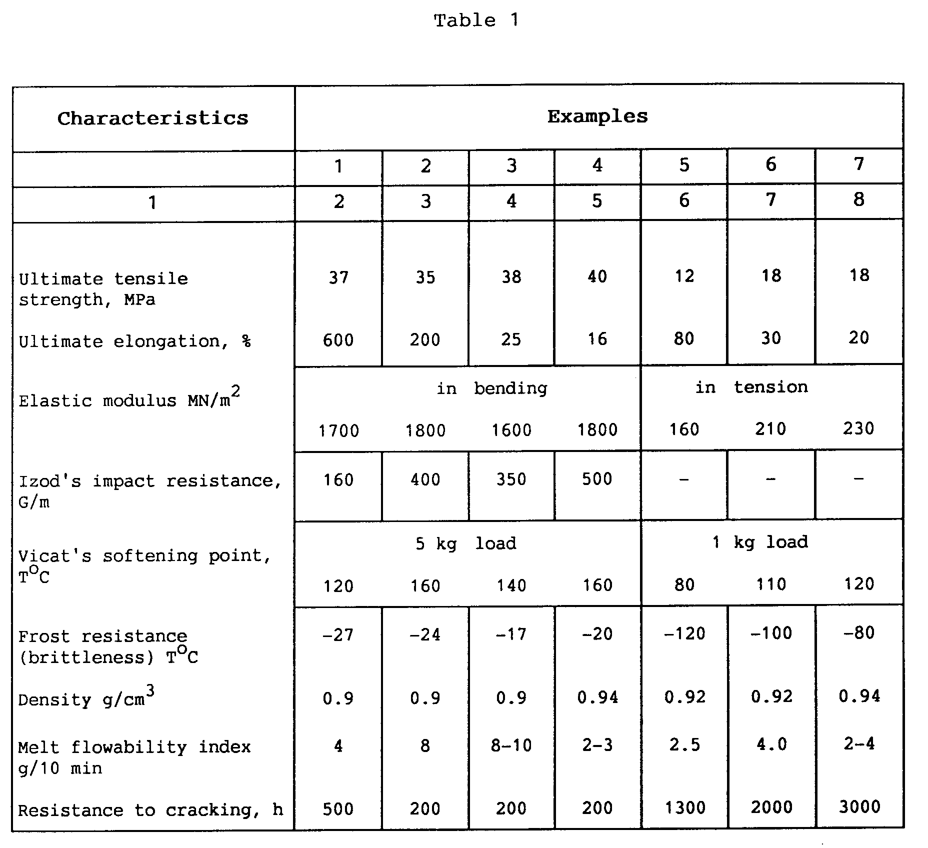

### Industrial Applicability

The present invention can find application in making polymers used for production of hot and cold water supply pipes, heat supply pipes, pipes for transportation of highly aggressive media, motor-vehicle bumpers, storage-battery containers, shaped construction elements, containers for storing superclean chemical products, powdery compositions for protective coatings and decorative facings.

## Claims

1. A process for reclamation of recycled polyolefins comprising thermochemical modification of preliminarily disintegrated and washed of dirt recycled polyolefins, which is carried out under constant stirring in a reaction medium containing liquid polyorganosiloxanes, subsequent drying and granulation of modified polyolefins, **characterized** in that, prior to granulation, added to the modified recycled polyolefins is from 10 to 50 wt.% of an inert filler preliminarily activated by radical-forming silanes.

2. A process as claimed in Claim 1, **characterized** in that used as an inert filler is a finely dispersed mineral substance selected from the group consisting of perlite, white soot, talc, chalk, kaolin, zinc oxide, titanium dioxide.

3. A process as claimed in Claim 1, **characterized** in that used as an activating radical-forming silane is the compound selected from the group consisting of chlorosilanes, aminosilanes, diphenylsilanediols.

4. A process as claimed in Claim 1, **characterized** in that added into the mixture of modified recycled polyolefins with activated filler is from 0.5 to 2.0 wt.% of structure-forming agents, whereupon granulation is carried out.

5. A process as claimed in Claim 4, **characterized** in that used as structure-forming agents is organic peroxide, chinon, diphenylguanidine.

6. Polymeric material manufactured according to Claim 1, **characterized** in that polyorganosiloxane molecules are grafted to the molecules of polyolefins and that the grafting is at active centres of the polymer being treated.

7. Polymeric material manufactured according to Claim 6, **characterized** in that the active centres are unsaturated bonds, tertiary hydrocarbon atoms or oxygen-containing groups.

8. Polymeric material manufactured according to Claim 6 or 7, **characterized** in that it contains a finely dispersed inactive filler.
